# EUROPÄISCHE PATENTSCHRIFT

(11) **EP 1 460 098 B1**
(45) Veröffentlichungstag und Bekanntmachung des Hinweises auf die Patenterteilung: **14.06.2006**
(21) Anmeldenummer: 04005390.2
(22) Anmeldetag: 06.03.2004
(51) Int. Cl.: C08G 77/38, C08G 77/08, C08G 77/46

(54) **Verfahren zur Herstellung von organisch modifizierten Polyorganosiloxanen**
Process for preparing modified organopolysiloxanes
Procédé de préparation d'organopolysiloxanes modifiés

(30) Priorität: 21.03.2003 DE 10312634
(43) Veröffentlichungstag der Anmeldung: 22.09.2004
(73) Patentinhaber: Goldschmidt GmbH, 45127 Essen (DE)
(72) Erfinder: Brehm, Isabella, Dr., 40882 Ratingen (DE); Eissmann, Ingrid, 45884 Gelsenkirchen (DE); Lüther, Heike, 45473 Mülheim (DE); Tomuschat, Philipp, Dr., 45127 Essen (DE)

(56) Entgegenhaltungen:
- EP-A- 0 019 837
- EP-B- 0 133 975
- WO-A-96/28497
- GB-A- 2 219 300
- US-A- 2 658 908
- US-A- 3 801 616
- US-A- 5 310 842

## Beschreibung

Gegenstand der Erfindung ist ein Verfahren zur Herstellung organisch modifizierter Polyorganosiloxane, bei dem unter der Verwendung einer katalytischen Mischung, bestehend aus mindestens einer Säure und mindestens einem Salz einer Säure, ein an das Silicium gebundenes Wasserstoffatom durch einen Alkoholatrest ersetzt wird.

Siloxane werden aufgrund ihrer einzigartigen Eigenschaften wie Wasserabstoßung, Grenzflächenaktivität, Temperäturstabilität etc. in zahlreichen technischen Anwendungen eingesetzt. Dazu zählen die Stabilisierung von Polyurethan-Schäumen, der Einsatz als Emulgatoren, in Trennbeschichtungen und viele weitere.

Um die einzigartigen Eigenschaften von Siloxanen in technischen Anwendungen nutzen zu können, ist jedoch zumeist eine Modifizierung des Siloxans mit organischen Gruppen erforderlich, da das reine Silicon im allgemeinen unverträglich mit wässrigen oder organischen Formulierungen ist.

Um organische Gruppen an ein Siloxan zu binden, stehen grundsätzlich zwei verschiedene Bindungstypen zur Verfügung. Im ersten Fall ist ein Kohlenstoffatom direkt an ein Siliciumatom gebunden (SiC-Verknüpfung), im zweiten Fall ist ein Kohlenstoffatom über ein Sauerstoffatom an das Siliciumatom gebunden (SiOC-Verknüpfung). Die SiC-Verknüpfung resultiert zumeist aus einer Hydrosilylierungsreaktion, während für die Bildung einer SiOC-Verknüpfung mehrere Methoden zur Verfügung stehen. Klassischerweise werden SiOC-Verknüpfungen durch die Reaktion eines Siloxans mit einer am Siliciumatom gebundenen Abgangsgruppe (z.B. Halogen) und einem Alkohol gebildet. Besonders Chlorsiloxane sind für diesen Reaktionstyp weit verbreitet. Chlorsiloxane sind jedoch schwierig zu handhaben, da sie äußerst reaktionsfreudig sind. Der Einsatz von Chlorsiloxanen ist weiterhin mit dem Nachteil verbunden, dass der im Verlauf der Reaktion gebildete Chlorwasserstoff eine Handhabung auf korrosionsbeständige Anlagen beschränkt und zu ökologischen Problemen führt. Darüber hinaus können in Gegenwart von Chlorsiloxanen und Alkoholen organische Chlorverbindungen gebildet werden, die aus toxikologischen Gründen nicht wünschenswert sind. Weiterhin ist es nicht einfach, bei der Reaktion eines Chlorsiloxans mit einem Alkohol einen quantitativen Umsatz zu erreichen. Häufig müssen Basen, die als HCl-Fänger dienen, eingesetzt werden, um gute Umsätze zu erzielen. Durch Einsatz dieser Basen kommt es zur Bildung großer Mengen an Salzfracht, die ihrerseits im industriellen Maßstab Probleme bei der Entfernung bereiten.

Als Alternative zu diesem Verfahren bietet sich an, Alkohole mit Siloxanen umzusetzen, in denen Wasserstoff direkt an das Siliciumatom gebunden ist (SiH-Siloxane). Unter geeigneten Bedingungen kommt es hier bei Ausbildung der SiOC-Bindung lediglich zur Abspaltung von Wasserstoff und es fällt keine Salzfracht an. Diese dehydrogenative Kondensation läuft nur in Anwesenheit eines Katalysators ab. Die US-A-5 147 965 verweist auf ein Verfahren, das in der japanischen Patentveröffentlichung JP-A-4-819941 beschrieben wird und bei dem ein SiH-Siloxan mit einem Alkohol unter Zugabe von Alkalimetallhydroxiden oder Alkalimetallalkoxiden umgesetzt wird. Als nachteilig an diesem Verfahren wird erwähnt, dass diese Bedingungen zwar geeignet sind, eine dehydrogenative Kondensation zu katalysieren, es jedoch zugleich zu einer Equilibrierung und damit einem Umbau des Siloxangrundgerüstes kommt. Soll das Siloxangrundgerüst im Verlauf der Reaktion nicht verändert werden, ist diese Methode ungeeignet. Im Gegensatz dazu beschreibt die EP-B-0 475 440 ein Verfahren, bei dem SiH-Siloxane mit einem Alkohol unter Zugabe einer organischen Säure in Gegenwart eines Pt-Salzes umgesetzt werden. Unter diesen Bedingungen kommt es zu keinem Umbau des Siloxangrundgerüstes. Für die Reaktion ist es aber unabdingbar, dass sowohl große Mengen an organischer Säure (0,1 bis 1 Mol bezogen auf Alkohol), Toluol als Lösungsmittel und ein Platinsalz eingesetzt werden. Da sowohl das Toluol als auch die organische Säure im Endprodukt unerwünscht sind, müssen diese nach beendeter Reaktion abgetrennt werden. Platinsalze sind nicht nur teuer, sondern sie sind aus physiologischer Sicht auch nicht ganz unbedenklich. Gerade im Bereich der kosmetischen Industrie gibt es den Wunsch nach Produkten frei von Platin.

Für die Herstellung von Alkoxysilanen durch Alkoholyse von monomeren Hydrosilanen beschreibt die Literatur die heterogene Katalyse von Salzen, wie z. B. Kaliumtartrat, - phthalat oder -formiat. Die Umsetzungen erfordern den äqiumolaren Einsatz der Salze (bezogen auf SiH-Einheiten) und gelingen nur bei hohen Temperaturen von ca. 180 °C (J. Boyer, R.J.P. Corriu, R. Perz, C. Reye J. Organomet. Chem. 1978, 157, 153-162). Sowohl die drastischen Bedingungen als auch die großen Mengen an notwendigem Salz machen die Reaktion für den technischen Maßstab unattraktiv.

In jüngster Zeit wurde in der Literatur über zwei weitere Methoden zur dehydrogenativen Kondensation von monomeren Hydro-Silanen mit Alkoholen berichtet. Zum einen kann Tris(pentafluorphenyl)boran als Katalysator für die Reaktion verwendet werden, wobei 1 bis 8 Mol-% der Verbindung als Katalysator eingesetzt werden und man in einem Lösungsmittel arbeitet (J.M. Blackwell, K.L. Foster, V.H. Beck, W.E. Piers J. Org. Chem. 1999, 64, 4887-4892). Nachteilig an diesem Katalysator ist sein Verbleiben im Reaktionsprodukt und seine ungenügende biologische Abbaubarkeit. Darüber hinaus sind Borverbindungen häufig unerwünscht, da sie physiologisch wirksam sind.

Zum anderen kann die Reaktion durch den Grubbs-Katalysator Cl₂(PCy₃)₂Ru=CHPh katalysiert werden, wobei 0,5 Mol-% der Verbindung als Katalysator eingesetzt werden. Bei diesem Verfahren kann ohne Lösungsmittel gearbeitet werden. Nachteilig an diesem Katalysator sind der hohe Preis und der Umstand, dass er sehr empfindlich gegen Oxidation ist, so dass unter sorgfältigem Luftausschluss gearbeitet werden muß. Darüber hinaus ist der Katalysator nicht nur in der gewünschten dehydrogenativen Kondensation, sondern auch in der homogen katalysierten Hydrierung aktiv, so dass der während der Kondensation gebildete Wasserstoff im Substrat enthaltene Doppelbindungen hydrieren kann (S. V. Maifeld, R. L. Miller, D. Lee Tetrahedron Lett. 2002, 43, 6363-6366).

Es bestand daher der Bedarf, ein technisch einfaches Verfahren zu finden, das es erlaubt, Siloxane ohne Abbau des Siloxangrundgerüsts chlorfrei und lösemittelfrei mit Alkoholen selektiv zu verknüpfen, wobei mit einem preiswerten katalytischen System gearbeitet wird, das physiologisch unbedenklich ist und einfach abgetrennt werden kann.

In dem Bestreben, die Nachteile des Standes der Technik zu überwinden und ein Verfahren bereitzustellen, welches eine vorteilhafte alternative Herstellung von alkoxy-modifizierten Siloxanen ermöglicht, wurde nun gefunden, dass dieses Ziel durch die Reaktion eines SiH-Siloxans mit einem Alkohol in Gegenwart einer geringen Menge einer katalytischen Mischung erreicht werden kann, die aus mindestens einer Säure und mindestens einem Salz einer Säure besteht.

Gegenstand der Erfindung ist demzufolge ein Verfahren zur Umsetzung von
A) -Si(H)-Einheiten enthaltenden Polyorganosiloxanen der allgemeinen Formel (I) 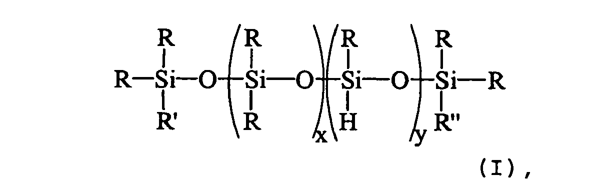 in denen mindestens ein Wasserstoffatom an ein Siliciumatom gebunden ist;
   - R: einen oder mehrere gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, insbesondere 1 bis 10 Kohlenstoffatomen, Halogenalkylgruppen mit 1 bis 20 Kohlenstoffatomen, Siloxygruppen und Triorganosiloxygruppen,
   - R' und R": unabhängig voneinander H oder R,
   - x: eine ganze Zahl von 0 bis 300, vorzugsweise von 0 bis 100, und
   - y: unabhängig davon eine ganze Zahl von 0 bis 80, insbesondere 0 bis 50, darstellt; mit
B) einem Alkohol, der ausgewählt ist aus der Gruppe der linearen oder verzweigten, gesättigten, ein- oder mehrfach ungesättigten, aromatischen, aliphatisch-aromatischen, gegebenenfalls andere Funktionen tragenden Mono- oder Polyalkoholen, Polyethermono- oder polyalkoholen, Aminoalkoholen, insbesondere N-Alkyl-, Arylamino-EO-, -PO-Alkoholen, N-Alkyl- oder Arylaminoalkoholen sowie deren Gemischen,
welches dadurch gekennzeichnet ist, dass man als Katalysator geringe Mengen einer Mischung verwendet, die aus mindestens einer Säure und mindestens einem Salz einer Säure besteht.

Überraschenderweise zeigen die erfindungsgemäßen Mischungen bereits in geringen Mengen eine hohe katalytische Aktivität, die eine zügige und selektive Reaktion gewährleistet, während im Gegensatz dazu weder die reine Säure noch das reine Salz in diesen Mengen eine nennenswerte katalytische Aktivität aufweisen. Der erfindungsgemäße Katalysator ermöglicht die lösemittelfreie Umsetzung von Polyorgano-Wasserstoffsiloxanen der allgemeinen Formel (I) zu an sich bekannten und neuen substituierten Polyorganosiloxanen. Der Katalysator ist physiologisch unbedenklich und kann nach der Reaktion leicht abfiltriert werden. Der Verzicht auf Lösemittel ist wirtschaftlich und ökologisch vorteilhaft. Des Weiteren wird bei diesem Verfahren das Siloxangrundgerüst nicht abgebaut.

Überraschenderweise wurde gefunden, dass bei Einsatz ungesättigter Alkohole keine Reaktion der Si(H)-Funktion an der Doppelbindung stattfindet. Auf diese Weise können ungesättigte Si-O-C-verknüpfte Reaktionsprodukte hergestellt werden.

Als wirksame Katalysatoren im Sinne der vorliegenden Erfindung werden Mischungen aus mindestens einer Säure und mindestens einem Salz einer Säure, bevorzugt Mischungen aus mindestens einer organischen Säure, wie z. B. einer Carbonsäure, Dithiocarbonsäure, Aryl-/Alkylsulfonsäure, Aryl-/Alkylphosphonsäure oder Aryl-/Alkylsulfinsäure und mindestens einem Metall- oder Ammoniumsalz einer organischen Säure, wobei das Metallkation ein- oder mehrwertig sein kann, eingesetzt. Das Verhältnis von Salz und Säure kann in weiten Bereichen variiert werden, bevorzugt ist ein Stoffmengenverhältnis von Säure zu Salz im Bereich von 1 : 5 bis 5 : 1, insbesondere 2 : 3 bis 3 : 2 Moläquivalenten. Weiterhin können mehrwertige Säuren oder Mischungen aus ein- und mehrwertigen Säuren sowie die entsprechenden Salze mit ein- oder mehrwertigen Kationen eingesetzt werden. Der pKs-Wert der Säure sollte nicht negativ sein, da es sonst zur Equilibrierung des Siloxangrundgerüsts kommt.

Eine besonders bevorzugte Ausführungsform der Erfindung besteht in der Verwendung von katalytischen Systemen, bestehend aus einer 1 : 1 Mischung aus einer Carbonsäure und ihrem Metall- oder Ammoniumsalz, wobei das Metall ein Hauptgruppenelement oder Übergangsmetall, besonders bevorzugt ein Metall der 1. und 2. Hauptgruppe ist. Der organische Rest der Carbonsäure ist ausgewählt aus cyclischen, linearen oder verzweigten, gesättigten, ein- oder mehrfach ungesättigten Alkyl-, Aryl-, Alkylaryl- oder Arylalkylresten mit 1 bis 40, insbesondere 1 bis 20 Kohlenstoffatomen, Halogenalkylgruppen mit 1 bis 40 Kohlenstoffatomen, hydroxy-, carboxy- oder alkoxysubstituierten Alkyl-, Aryl-, Alkylaryl- oder Arylalkylresten mit 1 bis 40 Kohlenstoffatomen.

Insbesondere sind solche Systeme bevorzugt, deren Carbonsäure ausgewählt ist aus:

Ameisensäure, Essigsäure, Propionsäure, Buttersäure, Valeriansäure, Capronsäure, Önanthsäure, Caprylsäure, Pellargonsäure, Caprinsäure, Undecansäure, Laurinsäure, Myristinsäure, Palmitinsäure, Stearinsäure, Arachinsäure, Behensäure, Cyclopentancarbonsäure, Cyclohexancarbonsäure, Acrylsäure, Methacrylsäure, Vinylessigsäure, Crotonsäure, 2-/3-/4-Pentensäure, 2-/3-/4-/5-Hexensäure, Lauroleinsäure, Myristoleinsäure, Palmitoleinsäure, Ölsäure, Gadoleinsäure, Sorbinsäure, Linolsäure, Linolensäure, Pivalinsäure, Ethoxyessigsäure, Phenylessigsäure, Milchsäure, Hydroxycapronsäure, 2-Ethylhexansäure, Oxalsäure, Malonsäure, Bernsteinsäure, Äpfelsäure, Weinsäure, Citronensäure, Glutarsäure, Adipinsäure, Pimelinsäure, Korksäure, Azelainsäure, Sebacinsäure, Benzoesäure, o-/m-/p-Tolylsäure, Salicylsäure, 3-/4-Hydroxybenzoesäure, Phthalsäuren, oder deren ganz oder teilweise hydrierten Derivaten wie Hexahydro- oder Tetrahydrophthalsäure, oder Gemischen derselben.

Im erfindungsgemäßen Verfahren kann grundsätzlich jede alkoholische Hydroxylgruppen aufweisende organische Verbindung eingesetzt werden, einschließlich der Diole, Triole, Polyole, Aminoalkohole und beispielsweise Hydroxycarbonsäuren und deren jeweiligen Derivate. Besonders bevorzugt sind Ethanol sowie Propylenoxid- bzw. Ethylenoxid-funktionalisierte Polyetheralkohole, die beispielsweise mit Butylalkohol, Allylalkohol oder Nonylphenol gestartet wurden.

Der Alkohol wird vorzugsweise äquimolar oder im Überschuss eingesetzt; besonders bevorzugt stellt man beim erfindungsgemäßen Verfahren das Stoffmengen-Verhältnis von SiH-Gruppen zu Alkoholgruppen im Bereich von 1 : 1 bis zu 1 : 3 Moläquivalenten ein.

Ohne weiteres lassen sich nach dem erfindungsgemäßen Verfahren auch teilsubstituierte Polyorganosiloxane herstellen, die neben den substituierten Si-O-C-Einheiten noch nicht umgesetzte Si(H)-Einheiten aufweisen. Dazu wird das Stoffmengen-Verhältnis von SiH-Gruppen zu Alkoholgruppen vorzugsweise im Bereich von 1 : 0,1 bis 1 : 0,99 Moläquivalenten eingestellt.

Um die Nebenreaktion von Si-H zu Si-OH zu unterbinden, ist es vorteilhaft, die eingesetzten Alkohole, insbesondere beim Einsatz von Polyetheralkoholen, vor dem Einsatz zu trocknen. Dies kann nach bekannten Verfahren wie beispielsweise durch Trocknungsmittel oder Vakuumdestillation erfolgen.

Im erfindungsgemäßen Verfahren eingesetzte Polyorganosiloxane können rein endständig, d. h. Si-H-Gruppen befinden sich lediglich an den Kopfgruppen der Polysiloxankette, rein seitenständig, d. h. Si-H-Gruppen befinden sich lediglich im Innern, nicht jedoch an den Kopfgruppen der Polysiloxankette, oder gemischtständig sein.

In gleicher Weise und ganz besonders bevorzugt können im erfindungsgemäßen Verfahren kammartige, α,ω-disubstituierte und gemischte Polydimethyl-Wasserstoffsiloxane der allgemeinen Formel (I) eingesetzt werden.

Ganz besonders bevorzugt ist beispielsweise der Einsatz von Polyorganosiloxanen der nachstehenden Formel (III):

M-O-Dₓ-D'_{y}-M (III)

wobei
- M: für Trialkylsilyl, insbesondere Trimethylsilyl,
- D: für Dialkylsilyloxy, insbesondere Dimethylsilyloxy und
- D': für 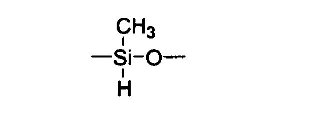
steht und x und y die oben angegebene Bedeutung haben.

Ebenso ganz besonders bevorzugt ist beispielsweise der Einsatz von Polyorganosiloxanen der nachstehenden Formel (IV) :

M'-O-Dₓ-M' (IV)

wobei
- M': für Dialkyl(hydrogen)silyl, insbesondere Dimethylhydrogensilyl und
- D: für Dialkylsilyloxy, insbesondere Dimethylsilyloxy
steht und x die oben angegebene Bedeutung hat.

Das erfindungsgemäße Verfahren kann lösungsmittelfrei durchgeführt werden, was insbesondere für die großtechnische Realisierung unter wirtschaftlichen und ökologischen Aspekten einen erheblichen Vorteil gegenüber dem Verfahren des Standes der Technik darstellt.

Im Gegensatz zum Verfahren nach dem Stand der Technik, wie z.B. ausgehend von Chlorsiloxanen, sind erfindungsgemäß Polyorganosiloxane herstellbar, die mit Organyloxy-Gruppen und/oder Amino-Organyloxy-Gruppen substituiert wurden und nicht mit aus der Substitutionsreaktion stammender Salzsäure, Chlorwasserstoff bzw. deren Neutralisationsprodukten entsprechenden Chloriden verunreinigt sind. Dies erleichtert eine Weiterverarbeitung bzw. Aufarbeitung erheblich. Beispielsweise entfällt eine aufwendige Abfiltration des chloridhaltigen Neutralisationsproduktes, beispielsweise in Form von Ammoniumchlorid.

Mit dem erfindungsgemäßen Verfahren ist daher ein technisch einfacher Weg gefunden worden, Polyorganosiloxane, enthaltend endständige und/oder seitenständige Si-O-C-verknüpfte einheitliche oder gemischte Reste, ausgewählt aus linearen oder verzweigten, gesättigten, ein- oder mehrfach ungesättigten, aromatischen, aliphatisch-aromatischen, gegebenenfalls andere Funktionen tragenden Mono- oder Polyalkoholen, Polyethern, Polyetheralkoholen oder Aminoalkoholen, insbesondere N-Alkyl-, Arylamino-EO-, -PO-Alkoholen, N-Alkyl- oder Arylaminoalkoholen oder Gemischen davon herzustellen, die frei sind von den genannten Verunreinigungen, insbesondere Restbestandteilen an Salzsäure und Neutralisationsprodukten, die Chlorid enthalten.

Dabei sind solche Polyorganosiloxane besonders bevorzugt, in denen die Reste ausgewählt sind aus einfachen Alkoholen wie Methanol, Ethanol etc. und Butylpolyether und/oder Allylpolyether.

Die erfindungsgemäßen Polyorganosiloxane sind für die Ausrüstung von Textilien, als Additive für Kunststoffe, Lacke, Druckfarben und für kosmetische Formulierungen oder im Bautenfarbenbereich und/oder als Polyurethan-Schaumstabilisatoren verwendbar.

### Ausführungsbeispiele:

### 1. Umsetzung von M'-O-D₁₃-M'-Siloxan mit einem Polyether unter Verwendung verschiedener Katalysatormischungen:

Zur Überprüfung der katalytischen Aktivität der einzelnen Katalysatoren wurde ein α,ω-SiH-funktionelles Siloxan mit einem SiH-Wert von 1,82 val/kg verwendet, was einer durchschnittlichen Kettenlänge von 15 entspricht (M'-O-D₁₃-M'). Als Alkohol wurde mit 10 Massen-% Überschuss ein mit Butanol gestarteter Polypropylenoxid-Polyether (mittlere Molmasse von 1.800 g/mol) mit einer OH-Zahl von 30 mg KOH/g verwendet, was einer durchschnittlichen Kettenlänge von 30 entspricht. Der Polyether wurde für 1 Stunde bei 120 °C und 30 mbar unter Durchleiten von Stickstoff getrocknet. Alle Reaktionen wurden unter Schutzgas ausgeführt. Bei der Reaktion entstand Wasserstoff, der über einen Blasenzähler abgeleitet wurde.

Alle Versuche wurden nach der gleichen Vorschrift durchgeführt.

### Reaktionsführung:

Der Polyether wird vorgelegt und unter Stickstoff für 30 min bei Reaktionstemperatur gerührt. Nach Zugabe der Katalysatormischung wird für weitere 10 min gerührt. Anschließend tropft man das SiH-Siloxan binnen 30 min zu und rührt die Mischung bei Reaktionstemperatur, bis die Wasserstoffentwicklung zum Erliegen kommt. Der Fortgang wie auch der Endpunkt der Reaktion wird durch die Bestimmung der Rest-SiH-Funktionen mittels gasvolumetrischer Wasserstoffbestimmung beobachtet bzw. bestimmt. Die Entfernung der Katalysatormischung erfolgt durch einfache Filtration über einen Faltenfilter. Man erhält eine farblose bis leicht gelbe Flüssigkeit mit einer Viskosität im Bereich von 370 bis 410 mPas (Brookfield-Viskosimeter). Das Endprodukt wird mittels ²⁹Si-NMR charakterisiert, wodurch die selektive Bildung der SiOC-Verknüpfung belegt wird.

In der folgenden Tabelle sind der verwendete Katalysator (1 : 1 Mischung aus Säure und Salz der Säure), die Menge an Katalysator (bezogen auf Alkohol), die Reaktionstemperatur und die Reaktionszeit aufgeführt, nach der 100 % Umsatz (SiH-Wert = 0 val/kg Prüfsubstanz) erreicht war.

| | | | |
|---|---|---|---|
| **Katalysator** | **Mol-%** | **T [°C]** | **t [h]** |
| Ameisensäure/Cäsium-Formiat | 5 | 120 | 8 |
| Essigsäure/Kalium-Acetat | 5 | 120 | 8 |
| Essigsäure/Cäsium-Acetat | 2,5 | 120 | 10 |
| Milchsäure/Kalium-Lactat | 5,2 | 110 | 8 |
| 2-Ethylhexansäure/ Kalium-2-Ethylhexanoat | 2,5 | 110 | 6 |
| 2-Ethylhexansäure/ Cäsium-2-Ethylhexanoat | 2,5 | 120 | 5 |
| 2-Ethylhexansäure/ Cäsium-2-Ethylhexanoat | 5 | 120 | 4 |
| Laurinsäure/Kalium-Laurat | 5 | 120 | 8 |
| Laurinsäure/Cäsium-Laurat | 2,5 | 120 | 6 |
| Ölsäure/Cäsium-Oleat | 2,5 | 120 | 4 |
| Benzoesäure/Cäsium-Benzoat | 2,5 | 120 | 11 |
| o-Tolylsäure/Cäsium-Salz der o-Tolylsäure | 2,5 | 120 | 7 |
| Kokosfettsäure (Schnitt)/Cäsiumsalz der Kokosfettsäure | 2,5 | 120 | 4 |

### 2. Umsetzung von M'-O-D₁₃-M'-Siloxan mit einem Diol (α,ω-hydroxy-funktionalisierter Polyether) unter Verwendung von Benzoesäure/Cäsiumbenzoat:

Umgesetzt wurde ein α,ω-SiH-funktionelles Siloxan mit einem SiH-Wert von 1,82 val/kg, was einer durchschnittlichen Kettenlänge von 15 entspricht (M'-O-D₁₃-M'), mit einem mit Propylenglykol gestarteten Polyether (mittlere Molmasse von 2.200 g/mol), der zu 90 % Propylenoxid (Rest Ethylenoxid) enthält, mit einer OH-Zahl von 47 mg KOH/g. Das eingesetzte Stoffmengenverhältnis von α,ω-SiH-Siloxan zu α,ω-hydroxyfunktionalisiertem Polyether betrug 4 : 5 Moläquivalente. Die Trocknung des Polyethers erfolgte für 1 Stunde bei 120 °C und 30 mbar unter Durchleiten von Stickstoff. Der Polyether wurde vorgelegt und unter Stickstoff für 30 min bei 120 °C gerührt. Nach Zugabe von 2,5 Mol-% (bezogen auf Alkohol) einer 1 : 1 Mischung aus Benzoesäure und Cäsiumbenzoat wurde für weitere 10 min gerührt und anschließend das SiH-Siloxan binnen 30 min zugetropft. Die Reaktionsmischung wurde bei 120 °C gerührt, bis nach 3 Stunden der SiH-Gehalt bei 0 lag. Die Reaktionsmischung wurde mit 2,1 Massen-% (bezogen auf die Gesamtmasse) Isopropanol versetzt. Nach 3 Stunden Rühren bei 130 °C wurde der Überschuss an Isopropanol destillativ im Vakuum entfernt. Die Entfernung der Katalysatormischung erfolgte durch einfache Filtration über einen Faltenfilter. Man erhält eine farblose Flüssigkeit mit einer Viskosität von 1.400 mPas (Brookfield-Viskosimeter).

Das Endprodukt wurde mittels ²⁹Si-NMR charakterisiert, wodurch die Selektivität der SiOC-Verknüpfung belegt wird.

### 3. Umsetzung von M'-O-D₁₃-M'-Siloxan mit einem mit Allylalkohol gestarteten Polyether unter Verwendung von Laurinsäure/Cäsiumlaurat:

Umgesetzt wurde ein α,ω-SiH-funktionelles Siloxan mit einem SiH-Wert von 1,82 val/kg, was einer durchschnittlichen Kettenlänge von 15 entspricht (M'-O-D₁₃-M'), mit einem mit Allylalkohol gestarteten Polypropylenoxid-Polyether (mittlere Molmasse 400 g/mol) mit einer Iod-Zahl von 63 g Iod/100 g Prüfsubstanz. Der Polyether wurde mit 10 Massen-% Überschuss eingesetzt. Die Trocknung des Polyethers erfolgte für 1 Stunde bei 120 °C und 30 mbar unter Durchleiten von Stickstoff. Der Polyether wurde vorgelegt und unter Stickstoff für 30 min bei 120 °C gerührt. Nach Zugabe von 2,5 Mol-% (bezogen auf Alkohol) einer 1 : 1 Mischung aus Laurinsäure und Cäsiumlaurat wurde für weitere 10 min gerührt und anschließend das SiH-Siloxan binnen 30 min zugetropft. Nach 3 Stunden Rühren bei 120 °C war ein SiH-Wert von 0 erreicht. Die Entfernung der Katalysatormischung erfolgte durch einfache Filtration über einen Faltenfilter. Das Filtrat hatte eine Iod-Zahl von 28 (theoretische Iod-Zahl 29 entsprechend vollständig vorhandener Doppelbindungen). Das Endprodukt wurde mittels ²⁹Si-NMR charakterisiert, wodurch die selektive SiOC-Verknüpfung unter Erhalt der Doppelbindungen belegt wurde.

## Patentansprüche

1. Verfahren zur Umsetzung von -Si(H)-Einheiten enthaltenden Polyorganosiloxanen der allgemeinen Formel (I) 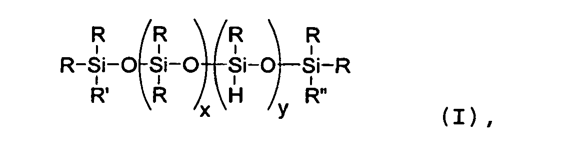 in denen mindestens ein Wasserstoffatom an ein Siliciumatom gebunden ist;
R einen oder mehrere gleiche oder verschiedene Reste, ausgewählt aus linearen oder verzweigten, gesättigten, ein- oder mehrfach ungesättigten Alkyl-, Aryl-, Alkylaryl- oder Arylalkylresten mit 1 bis 20, Halogenalkylgruppen mit 1 bis 20 Kohlenstoffatomen, Siloxygruppen und Triorganosiloxygruppen,
R' und R'' unabhängig voneinander H oder R,
x eine ganze Zahl von 0 bis 300,
y unabhängig davon eine ganze Zahl von 0 bis 80 darstellt;
mit einem Alkohol, der ausgewählt ist aus der Gruppe der linearen oder verzweigten, gesättigten, ein- oder mehrfach ungesättigten, aromatischen, aliphatisch-aromatischen, gegebenenfalls andere Funktionen tragenden Mono- oder Polyalkoholen, Polyethermono- oder polyalkoholen, Aminoalkoholen, insbesondere N-Alkyl-, Arylamino-EO-, - PO-Alkoholen, N-Alkyl- oder Arylaminoalkoholen sowie deren Gemischen, indem man in einem Verfahrensschritt unter Einsatz eines Katalysators in den Si(H)(R)-O-Einheiten des Polyorganosiloxans vorhandene Wasserstoffatome teilweise oder vollständig durch Alkoholatreste der eingesetzten Alkohole ersetzt, ohne dass es zu einem Abbau des Siloxangrundgerüsts kommt, **dadurch gekennzeichnet, dass** als Katalysator eine Mischung aus mindestens einer Säure und mindestens einem Salz einer Säure eingesetzt wird.

2. Verfahren gemäß Patentanspruch 1, **dadurch gekennzeichnet, dass** der pKs-Wert der Säure nicht negativ ist.

3. Verfahren gemäß einem der Patentansprüche 1 bis 2, **dadurch gekennzeichnet, dass** die katalytische Mischung ein Stoffmengenverhältnis von Säure zu Salz im Bereich von 1 : 5 bis 5 : 1 Moläquivalenten, besonders bevorzugt ein Stoffmengenverhältnis von 1 : 1 Moläquivalenten beinhaltet.

4. Verfahren gemäß einem der Patentansprüche 1 bis 3, **dadurch gekennzeichnet, dass** die katalytische Mischung aus mindestens einer organischen Säure und mindestens einem Salz einer organischen Säure, bevorzugt aus einer Carbonsäure und dem Salz derselben Carbonsäure besteht.

5. Verfahren gemäß einem der Patentansprüche 1 bis 4, **dadurch gekennzeichnet, dass** die Carbonsäure der Katalysatormischung ausgewählt ist aus der Gruppe:
Ameisensäure, Essigsäure, Propionsäure, Buttersäure, Valeriansäure, Capronsäure, Heptansäure, Caprylsäure, Nonansäure, Caprinsäure, Undecansäure, Laurinsäure, Myristinsäure, Palmitinsäure, Stearinsäure, Arachinsäure, Behensäure, Cyclopentancarbonsäure, Cyclohexancarbonsäure, Acrylsäure, Methacrylsäure, Vinylessigsäure, Crotonsäure, 2-/3-/4-Pentensäure, 2-/3-/4-/5-Hexensäure, Lauroleinsäure, Myristoleinsäure, Palmitoleinsäure, Ölsäure, Gadoleinsäure, Sorbinsäure, Linolsäure, Linolensäure, Pivalinsäure, Ethoxyessigsäure, Phenylessigsäure, Milchsäure, 2-Ethylhexansäure, Oxalsäure, Malonsäure, Bernsteinsäure, Weinsäure, Glutarsäure, Adipinsäure, Pimelinsäure, Korksäure, Azelainsäure, Sebacinsäure, Benzoesäure, o-/m-/p-Tolylsäure, Salicylsäure, 3-/4-Hydroxybenzoesäure, Phthalsäuren, oder deren ganz oder teilweise hydrierten Derivaten wie Hexahydro- oder Tetrahydrophthalsäure, oder Gemischen derselben.

6. Verfahren gemäß einem der Patentansprüche 1 bis 5, **dadurch gekennzeichnet, dass** das Salz ein Ammonium- oder ein Metallsalz ist.

7. Verfahren gemäß Patentanspruch 6, **dadurch gekennzeichnet, dass** das Metall ein Element der 1. und 2. Hauptgruppe ist.

8. Verfahren gemäß einem der Patentansprüche 1 bis 7, **dadurch gekennzeichnet, dass** als Alkohol mindestens eine Verbindung aus der Gruppe: Methanol, Ethanol, Butylpolyetheralkohole, Allylpolyetheralkohole oder Nonylphenylpolyetheralkohole, styroloxidhaltige und/oder butyloxidhaltige Polyetheralkohole eingesetzt wird.

9. Verfahren gemäß einem der Patentansprüche 1 bis 8, **dadurch gekennzeichnet, dass** ein Stoffmengenverhältnis von SiH-Gruppen zu Alkoholgruppen im Bereich von 1 : 1 bis 1 : 3 Moläquivalenten eingestellt wird.

10. Verfahren gemäß einem der Patentansprüche 1 bis 8, **dadurch gekennzeichnet, dass** das Stoffmengenverhältnis von SiH-Gruppen zu Alkoholgruppen im Bereich von 1 : 0,1 bis 1 : 0,99 Moläquivalenten liegt.

11. Verfahren gemäß einem der Patentansprüche 1 bis 10, **dadurch gekennzeichnet, dass** als Polyorganosiloxane endständige SiH-Polyorganosiloxane eingesetzt werden.

12. Verfahren gemäß einem der Patentansprüche 1 bis 10, **dadurch gekennzeichnet, dass** als Polyorganosiloxane seitenständige oder gleichzeitig seitenständige und endständige (gemischtständige) SiH-Polyorganosiloxane eingesetzt werden.

13. Verfahren gemäß einem der Patentansprüche 1 bis 12, **dadurch gekennzeichnet, dass** als Polysiloxane Verbindungen ausgewählt aus der Gruppe der kammartigen, α,ω-disubstituierten und gemischten Polydimethyl-Wasserstoffsiloxane der allgemeinen Formel (I) eingesetzt werden.

14. Verfahren gemäß Patentanspruch 11, **dadurch gekennzeichnet, dass** Polyorganosiloxane eingesetzt werden, die ausgewählt sind aus der Gruppe der allgemeinen Formel (IV):
M'-O-Dₓ-M' (IV)
worin
M' für Dialkyl(hydrogen)silyl, insbesondere Dimethylhydrogensilyl und
D für Dialkylsilyloxy, insbesondere Dimethylsilyloxy
steht und x die oben angegebene Bedeutung hat.

15. Verfahren gemäß Patentanspruch 12, **dadurch gekennzeichnet, dass** Polyorganosiloxane eingesetzt werden, die ausgewählt sind aus der Gruppe der allgemeinen Formel (III):
M-O-Dₓ-D'_{y}-M (III)
wobei
M für Trialkylsilyl, insbesondere Trimethylsilyl,
D für Dialkylsilyloxy, insbesondere Dimethylsilyloxy und
D' für 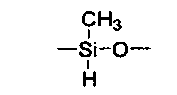
steht, x die oben angegebene Bedeutung hat und y eine ganze Zahl bis 80 dastellt.

16. Verfahren gemäß einem der Patentansprüche 1 bis 15, **dadurch gekennzeichnet, dass** die Umsetzung lösungsmittelfrei durchgeführt wird.

## Claims

1. Process for reacting polyorganosiloxanes which contain -Si(H) units and are of the general formula (I) 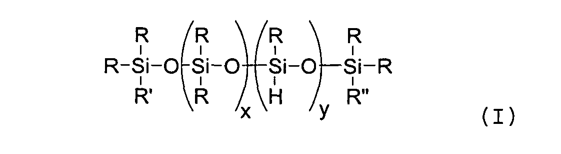 in which at least one hydrogen atom is bonded to a silicon atom;
R is one or more identical or different radicals selected from linear or branched, saturated, mono- or polyunsaturated alkyl, aryl, alkylaryl or arylalkyl radicals having from 1 to 20 carbon atoms, haloalkyl groups having from 1 to 20 carbon atoms, siloxy groups and triorganosiloxy groups,
R' and R'' are each independently H or R,
x is an integer from 0 to 300,
y independently thereof, is an integer from 0 to 80;
with an alcohol which is selected from the group of the linear or branched, saturated, mono- or polyunsaturated, aromatic, aliphatic- aromatic mono- or polyalcohols, polyether mono- or polyalcohols, amino alcohols, in particular N-alkyl, arylamino-EO, -PO alcohols, N-alkyl or arylamino alcohols, each of which may optionally bear other functions, and their mixtures, by, in a process step using a catalyst, partly or fully replacing hydrogen atoms present in the Si(H)(R)-O units of the polyorganosiloxane by alkoxide radicals of the alcohols used, without degrading the siloxane basic structure, **characterized in that** it comprises using a mixture of at least one acid and at least one salt of an acid as a catalyst.

2. Process according to Claim 1, **characterized in that** the pKa value of the acid is not negative.

3. Process according to one of Claims 1 to 2, **characterized in that** the catalytic mixture contains a ratio of acid to salt in the range from 1:5 to 5:1 molar equivalents, more preferably a ratio of 1:1 molar equivalent.

4. Process according to one of Claims 1 to 3, **characterized in that** the catalytic mixture consists of at least one organic acid and at least one salt of an organic acid, preferably of a carboxylic acid and the salt of the same carboxylic acid.

5. Process according to one of Claims 1 to 4, **characterized in that** the carboxylic acid of the catalyst mixture is selected from the group of:
formic acid, acetic acid, propionic acid, butyric acid, valeric acid, caproic acid, heptanoic acid, caprylic acid, nonanoic acid, capric acid, undecanoic acid, lauric acid, myristic acid, palmitic acid, stearic acid, arachic acid, behenic acid, cyclopentanecarboxylic acid, cyclohexanecarboxylic acid, acrylic acid, methacrylic acid, vinylacetic acid, crotonic acid, 2-/3-/4-pentenoic acid, 2-/3-/4-/5-hexenoic acid, lauroleic acid, myristoleic acid, palmitoleic acid, oleic acid, gadoleic acid, sorbic acid, linoleic acid, linolenic acid, pivalic acid, ethoxyacetic acid, phenylacetic acid, lactic acid, 2-ethylhexanoic acid, oxalic acid, malonic acid, succinic acid, tartaric acid, glutaric acid, adipic acid, pimelic acid, suberic acid, azelaic acid, sebacic acid, benzoic acid, o-/m-/p-tolylic acid, salicylic acid, 3-/4-hydroxybenzoic acid, phthalic acids, or their partly or fully hydrogenated derivatives such as hexahydro- or tetrahydrophthalic acid, or mixtures thereof.

6. Process according to one of Claims 1 to 5, **characterized in that** the salt is an ammonium or a metal salt.

7. Process according to Claim 6, **characterized in that** the metal is an element of the 1st and 2nd main group.

8. Process according to one of Claims 1 to 7, **characterized in that** the alcohol used is at least one compound from the group: methanol, ethanol, butyl polyether alcohols, allyl polyether alcohols or nonylphenyl polyether alcohols, styrene oxide-containing and/or butyl oxide-containing polyether alcohols.

9. Process according to one of Claims 1 to 8, **characterized in that** a ratio of SiH groups to alcohol groups in the range from 1:1 to 1:3 molar equivalents is established.

10. Process according to one of Claims 1 to 8, **characterized in that** the ratio of SiH groups to alcohol groups is in the range from 1:0.1 to 1:0.99 molar equivalents.

11. Process according to one of Claims 1 to 10, **characterized in that** the polyorganosiloxanes used are terminal SiH-polyorganosiloxanes.

12. Process according to one of Claims 1 to 10, **characterized in that** the polyorganosiloxanes used are pendant or simultaneously pendant and terminal (mixed) SiH polyorganosiloxanes.

13. Process according to one of Claims 1 to 12, **characterized in that** the polysiloxanes used are compounds selected from the group of comb-like, α,ω-disubstituted and mixed polydimethylhydrosiloxanes of the general formula (I).

14. Process according to Claim 11, **characterized in that** polyorganosiloxanes are used which are selected from the group of the general formula (IV):
M'-O-Dₓ-M' (IV)
where
M' is dialkyl(hydro)silyl, in particular dimethylhydrosilyl and
D is dialkylsilyloxy, in particular dimethylsilyloxy.
and x is as defined above.

15. Process according to Claim 12, **characterized in that** polyorganosiloxanes are used which are selected from the group of the general formula (III):
M-O-Dₓ-D'_{y}-M (III)
where
M is trialkylsilyl, in particular trimethylsilyl,
D is dialkylsilyloxy, in particular dimethylsilyloxy and
D' is 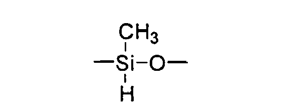
x is as defined above and y is an integer up to 80.

16. Process according to one of Claims 1 to 15, **characterized in that** the reaction is carried out without solvent.

## Revendications

1. Procédé pour la transformation de polyorganosiloxanes contenant des unités -Si(H) de formule générale (I) 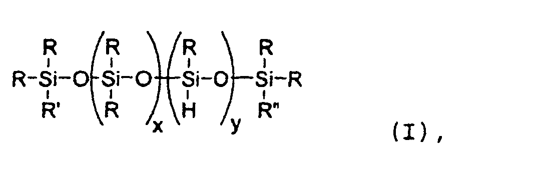 dans lesquels au moins un atome d'hydrogène est lié à un atome de silicium ;
R représente un ou plusieurs radicaux identiques ou différents, choisis parmi les radicaux alkyle, aryle, alkylaryle ou arylalkyle linéaires ou ramifiés, saturés, monoinsaturés ou polyinsaturés, comprenant 1 à 20 atomes de carbone, les groupements halogénoalkyle comprenant 1 à 20 atomes de carbone, les groupements siloxy et les groupements triorganosiloxy,
R' et R" représentent, indépendamment l'un de l'autre, H ou R,
x représente un nombre entier de 0 à 300,
y représente, indépendamment, un nombre entier de 0 à 80 ;
avec un alcool, choisi dans le groupe des monoalcools ou des polyalcools linéaires ou ramifiés, saturés, monoinsaturés ou polyinsaturés, aromatiques, aliphatiques-aromatiques, portant le cas échéant d'autres fonctions, des polyéthermonoalcools ou des polyétheralcools, des aminoalcools, en particulier les N-alkyl-amino-OE-alcools, les arylamino-OE-alcools, les N-alkyl-amino-OP-alcools, les arylamino-OP-alcools, les N-alkylaminoalcools ou les arylaminoalcools ainsi que leurs mélanges, en ce qu'on remplace, dans une étape de procédé, avec utilisation d'un catalyseur, les atomes d'hydrogène présents dans les unités Si(H)(R)-O du polyorganosiloxane partiellement ou complètement par des radicaux alcoolate des alcools utilisés, sans que la structure de base siloxane soit dégradée, **caractérisé en ce qu'**on utilise comme catalyseur un mélange d'au moins un acide et d'au moins un sel d'un acide.

2. Procédé selon la revendication 1, **caractérisé en ce que** la valeur pKs de l'acide n'est pas négative.

3. Procédé selon la revendication 1 ou 2, **caractérisé en ce que** le mélange catalytique présente un rapport de quantités d'acide à sel dans la plage de 1 : 5 à 5 : 1 équivalents en mole, de manière particulièrement préférée un rapport de quantités de 1 : 1 équivalent en mole.

4. Procédé selon l'une quelconque des revendications 1 à 3, **caractérisé en ce que** le mélange catalytique est constitué par au moins un acide organique et au moins un sel d'un acide organique, de préférence d'un acide carboxylique et du sel de ce même acide carboxylique.

5. Procédé selon l'une quelconque des revendications 1 à 4, **caractérisé en ce que** l'acide carboxylique du mélange de catalyseur est choisi dans le groupe constitué par:
l'acide formique, l'acide acétique, l'acide propionique, l'acide butyrique, l'acide valérianique, l'acide caproïque, l'acide heptanoïque, l'acide caprylique, l'acide nonanoïque, l'acide caprique, l'acide undécanoïque, l'acide laurique, l'acide myristique, l'acide palmitique, l'acide stéarique, l'acide arachidique, l'acide béhénique, l'acide cyclopentanecarboxylique, l'acide cyclohexanecarboxylique, l'acide acrylique, l'acide méthacrylique, l'acide vinylacétique, l'acide crotonique, l'acide 2-/3-/4-penténoïque, l'acide 2-/3-/4-/5-hexénoïque, l'acide lauroléique, l'acide myristoléique, l'acide palmitoléique, l'acide oléique, l'acide gadoléique, l'acide sorbique, l'acide linoléique, l'acide linolénique, l'acide pivalique, l'acide éthoxyacétique, l'acide phénylacétique, l'acide lactique, l'acide 2-éthylhexanoïque, l'acide oxalique, l'acide malonique, l'acide succinique, l'acide tartrique, l'acide glutarique, l'acide adipique, l'acide pimélique, l'acide subérique, l'acide azélaïque, l'acide sébacique, l'acide benzoïque, l'acide o-/m-/p-tolylique, l'acide salicylique, l'acide 3-/4-hydroxybenzoïque, les acides phtaliques ou leurs dérivés partiellement ou totalement hydrogénés tels que l'acide hexahydrophtalique ou l'acide tétrahydrophtalique ou les mélanges de ceux-ci.

6. Procédé selon l'une quelconque des revendications 1 à 5, **caractérisé en ce que** le sel est un sel d'ammonium ou de métal.

7. Procédé selon la revendication 6, **caractérisé en ce que** le métal est un élément du 1er et du 2ème groupe principal.

8. Procédé selon l'une quelconque des revendications 1 à 7, **caractérisé en ce qu'**on utilise comme alcool au moins un composé du groupe: méthanol, éthanol, les butylpolyétheralcools, les allylpolyétheralcools ou les nonylphénylpolyétheralcools, les polyétheralcools contenant de l'oxyde de styrène et/ou du butyloxyde.

9. Procédé selon l'une quelconque des revendications 1 à 8, **caractérisé en ce qu'**on règle un rapport de quantités de groupements SiH à groupements alcool de 1 : 1 à 1 : 3 équivalents en mole.

10. Procédé selon l'une quelconque des revendications 1 à 8, **caractérisé en ce que** le rapport de quantités de groupements SiH à groupements alcool est situé dans la plage de 1 : 0,1 à 1 : 0,99 équivalent en mole.

11. Procédé selon l'une quelconque des revendications 1 à 10, **caractérisé en ce qu'**on utilise comme polyorganosiloxanes des polyorganosiloxanes à groupement SiH en position terminale.

12. Procédé selon l'une quelconque des revendications 1 à 10, **caractérisé en ce qu'**on utilise comme polyorganosiloxanes des polyorganosiloxanes à groupements SiH en position latérale ou simultanément en position latérale et terminale (positions mixtes).

13. Procédé selon l'une quelconque des revendications 1 à 12, **caractérisé en ce qu'**on utilise comme polysiloxanes des composés choisis dans le groupe des polydiméthylhydrogénosiloxanes de type peigne, α,ω-disubstitués et mixtes de formule générale (I).

14. Procédé selon la revendication 11, **caractérisé en ce qu'**on utilise des polyorganosiloxanes qui sont choisis dans le groupe de formule générale (IV):
M'-O-Dₓ-M' (IV)
dans laquelle
M' représente dialkyl(hydrogéno)silyle, en particulier diméthylhydrogénosilyle et
D représente dialkylsilyloxy, en particulier diméthylsilyloxy
et x a la signification susmentionnée.

15. Procédé selon la revendication 12, **caractérisé en ce qu'**on utilise des polyorganosiloxanes qui sont choisis dans le groupe de formule générale (III):
M-O-Dₓ-D'_{y}-M (III)
où
M représente trialkylsilyle, en particulier triméthylsilyle,
D représente dialkylsilyloxy, en particulier diméthylsilyloxy et
D' représente 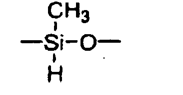 x a la signification susmentionnée et
y représente un nombre entier jusqu'à 80.

16. Procédé selon l'une quelconque des revendications 1 à 15, **caractérisé en ce que** la transformation est réalisée sans solvant.
